(19) **Europäisches Patentamt**
European Patent Office
Office européen des brevets

(11) **EP 1 674 884 B1**

(12) **EUROPÄISCHE PATENTSCHRIFT**

(45) Veröffentlichungstag und Bekanntmachung des Hinweises auf die Patenterteilung:
**11.08.2010 Patentblatt 2010/32**

(51) Int Cl.:
***G01S 13/90*** *(2006.01)*

(21) Anmeldenummer: **05025277.4**

(22) Anmeldetag: **18.11.2005**

(54) **Verfahren zur Signaldatenverarbeitung eines fluggerätgetragenen Radars mit synthetischer Apertur und eine Vorrichtung dafür**

Method of signal processing in an airborne radar with synthetic aperture and device therefor

Procédé de traitement de signal d'un radar porté par aéronef avec aperture synthétique et son dispositif

(84) Benannte Vertragsstaaten:
**DE FR GB IT**

(30) Priorität: **21.12.2004 DE 102004061486**

(43) Veröffentlichungstag der Anmeldung:
**28.06.2006 Patentblatt 2006/26**

(73) Patentinhaber: **EADS Deutschland GmbH**
**85521 Ottobrunn (DE)**

(72) Erfinder:
• **Kaltschmidt, Horst, Prof. Dr.**
**85579 Neubiberg (DE)**

• **Klausing, Helmut, Dr.**
**82234 Wessling-Hochstadt (DE)**
• **Dämbkes, Heinrich, Prof. Dr.**
**89275 Elchingen/Thalfingen (DE)**

(74) Vertreter: **Meel, Thomas**
**EADS Deutschland GmbH**
**Patentabteilung DSLAIP1**
**88039 Friedrichshafen (DE)**

(56) Entgegenhaltungen:
**EP-A1- 0 634 668      WO-A-88/10434**
**WO-A-02/088771      DE-C1- 3 922 086**

EP 1 674 884 B1

## Beschreibung

Die Erfindung betrifft ein Verfahren zur Signaldatenverarbeitung eines fluggerätgetragenen Radars mit synthetischer Apertur und eine Vorrichtung dafür.

Es sind Radarsysteme mit synthetischer Apertur (SAR: synthetic apertur radar) für Flugzeuge und unbemannte Fluggeräte, z.B. Drohnen als Trägerplattform bekannt. Es ist weiterhin bekannt, dass SAR-Systeme Bilder hoher Auflösung liefern, jedoch nur seitlich zum Flugweg [1]. Dies bedeutet die SAR-Antenne muss seitlich zur Flugrichtung ausgerichtet sein, um eine große Apertur zu erzeugen, die als Basis für die hohe Lateralauflösung dient. Dabei wird der Flugweg des Antennenträgers zum Aufspannen einer großen synthetischen Apertur S genutzt. Diese Verfahren sind unter dem Begriff "Synthetische Apertur-Radare (SAR)" in vielfältiger Weise im Einsatz. Aus DE 38 82 707 T2 ist ein Verfahren bekannt, bei welchem zur Kompensation von Bildverzerrungen in Abhängigkeit der Querbeschleunigung der Trägerplattform die der Signalverarbeitung nach dem SAR-Prinzip zugrunde liegende Referenzfunktion ausgewählt wird.

Ein weiteres auf einer synthetischen Apertur basierendes Radarsystem ist unter dem Begriff ROSAR bekannt. Dieses Radarsystem zeichnet sich im Wesentlichen dadurch aus, dass das Radargerät zumindest einen Sender und einen Empfänger aufweist, deren zumindest eine Antenne zum Senden und Empfangen von Radarimpulsen am Ende einer rotierenden Antenne angeordnet ist.

Aus der DE 39 22 086 C1 und DE 43 23 511 C1 ist ein ROSAR-Gerät bekannt, das in Echtzeitnähe im Online-Betrieb einsetzbar ist und neben der Kartographie, der Hinderniswarnung auch der Landehilfe dienen soll. Das ROSAR-Gerät wird gepulst oder im FM-CW-Betrieb betrieben und arbeitet im cm- bzw. mm-Wellenlängenbereich. Die bisher auf dem ROSAR-Prinzip erstellten Konzepte für zivile und militärische Anwendungen sind primär für den Hubschraubereinsatz konzipiert. Hierbei wird von einer konstanten Länge des Rotorblattes bzw. rotierenden Armes ausgegangen. Die gesamte Signalverarbeitung nach dem ROSAR-Prinzip ist in den genannten Druckschriften ausführlich beschrieben.

Das Radarverfahren nach dem ROSAR-Prinzip beruht auf der Auswertung der Dopplerinformation für jeden einzelnen Punkt am Boden innerhalb der realen Antennenkeule und setzt daher eine Relativbewegung der Antenne und ein gepulstes kohärentes Radargerät voraus. Die Relativbewegung der Antenne wird bei einem ROSAR-Gerät durch die Rotationsbewegung der Antennen gegenüber dem zu detektierenden Ziel erzeugt. Das Empfangssignal wird Puls für Puls mit einem aus der Beleuchtungsgeometrie abgeleiteten Satz von Referenzfunktionen kreuzkorreliert, wobei für jedes Entfernungselement bzw. jede Auflösungszelle am Boden eine Referenzfunktion vorhanden ist. Die Berechnung der Referenzfunktionen, im Weiteren auch als Klausing'sche Referenzfunktionen bezeichnet, sind ausführlich in [1] beschrieben. Die Klausing'sche Referenzfunktion ist gemäß [1] und DE 39 22 086 C1 durch folgende vier ROSAR-Kenngrößen bestimmt, die als zeitlich konstant vorausgesetzt werden :

1. Länge L des Rotorblattes bzw. die Entfernung der Antenne zum Drehpunkt,
2. Kreisfrequenz $\omega$ des Rotorblattes,
3. Entfernung R zwischen Objekt und Drehpunkt,
4. Höhe H der Antenne über dem Boden.

In Zukunft werden Drohnen zunehmend Einsätze im Bereich der taktischen und strategischen Luftaufklärung übernehmen mit den konkreten Aufgaben der Zielortung, Wirkungsaufklärung und Gewinnung von Lageinformationen. Dabei spielt neben der autonomen Aufklärung zunehmend die Zielbekämpfung eine wesentliche Rolle. Daraus folgt direkt die Forderung, dass eine hoch auflösende Abbildung des Zielgebietes bis in den Wirkungsraum hinein bei großer Annäherungsgeschwindigkeit erfolgen soll. Zusätzlich ist das Erfordernis der Aufklärung sich bewegender Ziele gegeben.

Ein Verfahren nach dem Oberbegriff des Anspruchs 1 ist aus der Offenbarung in WO-A-02 08 771 bekannt.

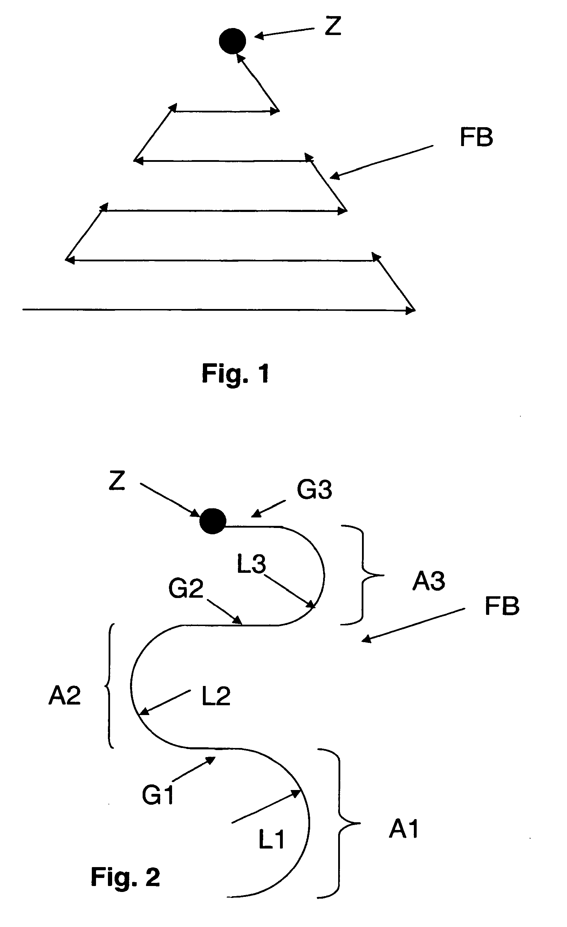

Mit dem SAR-Prinzip besteht für Aufklärungs- und Kampfdrohnen die Möglichkeit, hoch aufgelöste Bilder des Einsatzraumes zu erzeugen. Dabei wird das aufzuklärende Gebiet entweder mit einer linearen oder mäanderförmigen Flugbahn überflogen, um die notwendige synthetische Apertur zu erzeugen. Hierbei ergeben sich allerdings insbesondere beim Kurvenflug bei einer mäanderförmigen Flugbahn Nachteile bei der Signaldatenauswertung nach dem SAR-Prinzip. Eine mäanderförmige Flugbahn FB aus linearen Flugbahnabschnitten, wie sie in Fig. 1 dargestellt ist kann wegen der begrenzten Querbeschleunigungsfähigkeit $\alpha_{max}$ des Fluggeräts nicht geflogen werden. Der kleinste Krümmungsradius $r_{min}$, den ein Fluggerät mit der Geschwindigkeit $v_T$ fliegen kann berechnet sich gemäß

$$r_{min} = \frac{v_T^2}{\alpha_{max}} . \qquad\qquad (1)$$

Es ist somit mit den herkömmlichen Abbildungsverfahren nicht möglich, eine hoch auflösende Abbildung des Zielgebiets bei gleichzeitiger Annäherung an ein Ziel Z zu realisieren.

Aufgabe der Erfindung ist es somit, ein Verfahren anzugeben, mit dem es möglich ist, Signaldaten von einem Radarsystem derart auszuwerten, dass im Kurvenflug eine hoch aufgelöste Abbildung des zu überfliegenden Zielgebiets bei gleichzeitiger Zielannäherung möglich ist. Eine weitere Aufgabe besteht in der Angabe eines entsprechenden Fluggeräts.

Diese Aufgaben werden mit den Merkmalen gemäß Anspruch 1 und 9 gelöst. Vorteilhafte Ausführungen des Verfahrens sind Gegenstand von Unteransprüchen.

Erfindungsgemäß erfolgt in Abhängigkeit der Querbeschleunigung des Fluggeräts ein Umschalten der Signaldatenverarbeitung zwischen einer Signalverarbeitung nach dem SAR-Prinzip und einer Signalverarbeitung nach dem ROSAR-Prinzip. Das Fluggerät umfasst erfindungsgemäß ein für das Signalauswerteverfahren nach dem SAR-Prinzip und ein für das Signalauswerteverfahren nach dem ROSAR-Prinzip gemeinsames Antennen-Frontend.

In einer vorteilhaften Ausführung der Erfindung erfolgt die Umschaltung von der Signalverarbeitung nach dem SAR-Prinzip zur Signalverabeitung nach dem ROSAR-Prinzip bei Überschreitung eines vorgebbaren Schwellwertes $\alpha_{schwell}$ der Querbeschleunigung des Fluggeräts. Die Umschaltung von der Signalverabeitung nach dem ROSAR-Prinzip zur Signalverarbeitung nach dem SAR-Prinzip erfolgt vorteilhaft bei Unterschreitung des Schwellwertes $\alpha_{Schwell}$.

Die Signalverarbeitung nach dem SAR-Prinzip erfolgt bevorzugt beim Geradeausflug des Flugkörpers. Und die Signalverarbeitung nach dem ROSAR-Prinizp erfolgt bevorzugt beim Kurvenflug des Flugkörpers.

Die Erfindung sowie weitere vorteilhafte Ausführungen der Erfindung werden im Weiteren anhand von Zeichnungen näher erläutert. Es zeigen:

Fig. 1      eine beispielhafte Gebietsaufklärung mit einem Signalauswerteverfahren nach dem klassischen SAR-Verfahren mit einer theoretisch erforderlichen mäanderförmigen Flugbahn mit Zielannäherung,

Fig. 2      eine beispielhafte Gebietsaufklärung mit einem Signalauswerteverfahren nach dem erfindungsgemäßen Verfahren mit einer realistischen Flugbahn umfassend beispielhaften halbkreisförmigen Flugabschnitten mit einer Zielannäherung,

Fig. 3      eine weitere beispielhafte Gebietsaufklärung mit einem Signalauswerteverfahren nach dem erfindungsgemäßen Verfahren mit einer realistischen Flugbahn umfassend beispielhaften kreisbogenförmigen Flugabschnitten mit einer Zielannäherung,

Fig. 4      ein Blockschaltbild zur Entscheidungsfindung einer Signalverarbeitung nach dem linearen SAR-Prinzip oder nach dem ROSAR-Prinzip,

Fig. 5      ein Blockschaltbild zur Signalverarbeitung nach dem ROSAR-Prinzip bei Kurvenflug.

Fig. 2 zeigt eine Flugbahn FB, bei der gemäß dem erfindungsgemäßen Verfahren sowohl Zielortung und Zielverfolgung als auch schnellste Zielannäherung unter Berücksichtigung maximaler Querbeschleunigungsfähigkeit des Fluggeräts möglich ist. Die Flugbahn FB gemäß Fig. 2 besteht beispielhaft aus halbkreisförmigen Flugabschnitten A1, A2, A3. Die einzelnen Krümmungsradien L1, L2, L3, wobei der Index den jeweiligen halbkreisförmigen Flugabschnitt angibt, nehmen in Richtung des Ziels Z beispielhaft ab. Dadurch wird eine Annäherung an das Ziel Z ermöglicht.

Auf den halbkreisförmigen Flugabschnitten A1, A2, A3 werden die Signaldaten erfindungsgemäß nach dem ROSAR-Prinizp ausgewertet. Zwischen den halbkreisförmigen Flugabschnitten A1, A2, A3 sind lineare Flugabschnitte G1, G2, G3 vorhanden. Auf diesen linearen Flugabschnitten G1, G2, G3 werden die Signaldaten erfindungsgemäß nach dem SAR-Prinizip ausgewertet.

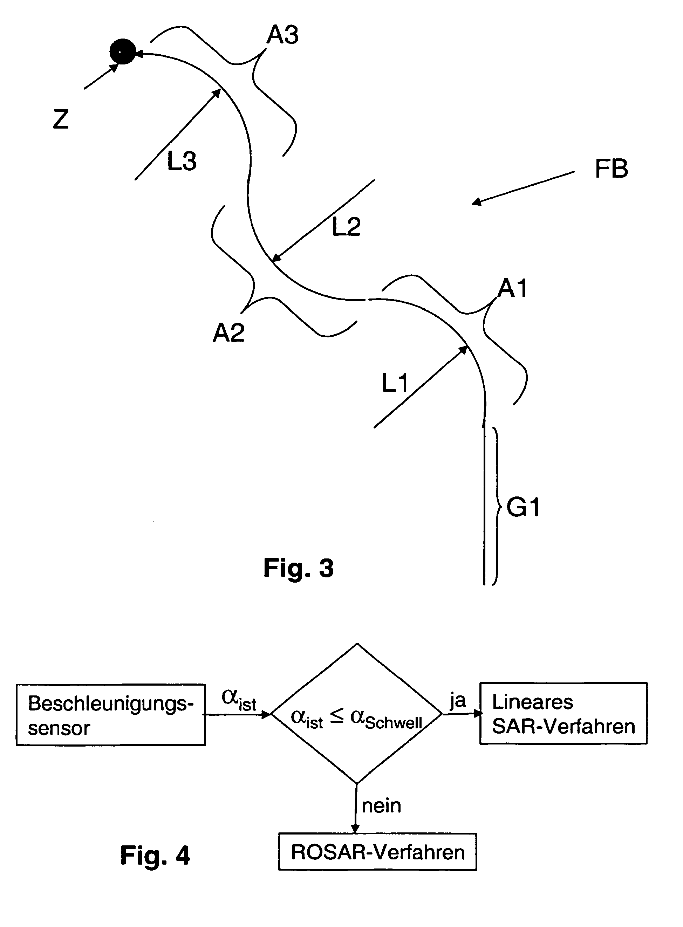

Fig. 3 zeigt eine weitere beispielhafte Flugbahn, bei welcher die Flugbahn FB neben einem linearen Abschnitt G1 aus mehreren kreisbogenförmigen Flugabschnitten A1, A2, A3 besteht. Mit zunehmender Annäherung an das Ziel Z nehmen die Krümmungsradien L1, L2, L3 ab. Selbstverständlich können zwischen zwei benachbarten kreisbogenförmigen Flugabschnitten A1, A2, A3 auch entsprechend Fig. 2 lineare Flugabschnitte (nicht dargestellt) vorhanden sein.

Entsprechend der abschnittsweise im Wesentlichen aus Kreisbögen bestehenden Flugbahn, worunter im Weiteren auch halbkreisförmige Flugbahnen verstanden werden, berechnet sich die Lateralauflösung $\Delta x_n$ für einen kreisbogenförmigen Flugabschnitt n mit vorgegebenen Radius $L_n$ gemäß:

$$\Delta x_n = \frac{\lambda}{5 \cdot L_n \cdot \sin\left(\dfrac{\gamma}{2}\right)} \cdot R_n \qquad\qquad (2)$$

mit

$\lambda$: der Sendefrequenz entsprechende Wellenlänge,

$L_n$ : Radius des jeweiligen kreisbogenförmigen Flugabschnitts,
$\gamma$ : Öffnungswinkel der Antenne,
$R_n$ : Entfernung zwischen Flugkörper und Ziel vor Kurvenflug.

Hieraus lässt sich jeweils der für eine vorgegebene Auflösung $\Delta x$ notwendige Kreisbahnradius $L_n$ berechnen:

$$L_n = \frac{\lambda}{5 \cdot \Delta x_n \cdot \sin\left(\dfrac{\gamma}{2}\right)} \cdot R_n \qquad (3)$$

Dieser Kreisradius $L_n$ ist größer als der Radius in Gleichung (1). Für den vereinfachten Fall, dass die Antenne einen Öffnungswinkel von $\gamma$=180° aufweist, beträgt der jeweilige Bahnradius $L_n$:

$$L_n = \frac{\lambda}{5 \cdot \Delta x_n} \cdot R_n \, . \qquad (4)$$

In diesem beschriebenen Fall wird zur Berechnung des Kurvenradius $L_n$ die Lateralauflösung $\Delta x_n$ jeweils vorgegeben.
Soll eine Zielannäherung mit gleich bleibender und maximaler Lateralauflösung $\Delta x_{max}$ durchgeführt werden, dann ist die Maximalentfernung $R_{max}$ (nicht dargestellt) in der Zielausklärung betrieben werden soll vor dem Kurvenflug sowie die synthetische Apertur S (nicht dargestellt) des SAR beim Geradeausflug auf dem Abschnitt G1 zu berücksichtigen. In diesem Fall gilt für die Lateralauflösung:

$$\Delta x_{max} = \frac{\lambda}{2S} \cdot R_{max} \qquad (5)$$

Für den jeweiligen Kurvenradius $L_n$ gilt gemäß Gleichung (4) in Abhängigkeit der jeweiligen Anfangsentfernung $R_n$ zwischen Flugkörper und Ziel vor dem Kurvenflug:

$$L_n = \frac{\lambda}{5\Delta x_{max}} \cdot R_n \qquad (6)$$

Aus den Gleichungen (5) und (6) berechnet sich somit der jeweilige Kurvenradius $L_n$ bei jeweils gleich bleibender Lateralauflösung $\Delta x_{max}$ gemäß:

$$L_n = \frac{2R_n}{5R_{max}} \cdot S \qquad (7)$$

Die Berechnung nach Gleichung (7) wird sinngemäß fortgesetzt solange die Bedingung

$$L_n \geq \frac{v_T^2}{\alpha_{max}}$$

erfüllt ist.

Sobald für $L_n < \dfrac{v_T^2}{\alpha_{max}}$ gilt, wird mit dem vorher berechneten Kurvenradius geflogen.

Sobald für $R_n \leq 3L_n$ gilt, wird die letzte kreisbogenförmige Flugbahn an der Stelle in eine Gerade überführt, an der sich eine Tangente zum Ziel legen lässt.

In einer vorteilhaften Ausführung weist ein Fluggerät mit einem Radarsystem, welches Signaldaten mit dem erfindungsgemäßen Verfahren auswertet ein gemeinsames Antennen-Frontend auf. Somit ist es möglich, dass die Radarempfangssignale für die Signalverarbeitung nach dem SAR-Prinzip und für die Signalverarbeitung nach dem ROSAR-Prinzip über ein gemeinsames Antennen-Frontend empfangen werden können. Dies bringt Vorteile hinsichtlich des eingeschränkten Raumangebots sowie hinsichtlich des Gewichts des Fluggeräts.

In einer vorteilhaften Ausführung des erfindungsgemäßen Verfahrens wird bei der Berechnung der Referenzfunktion der Radius der jeweiligen Flugbahn berücksichtigt. Hierbei entspricht der Radius der jeweiligen Flugbahn zweckmäßig der in DE 39 22 086 C1 beschriebenen Entfernung zwischen der Antenne und dem Drehpunkt des Rotors. Der jeweilige Radius der Flugbahn wird vorteilhaft mittels eines Beschleunigungssensor in Abhängigkeit der jeweiligen Querbeschleunigung (Radialbeschleunigung) des Flugkörpers bestimmt.

Fig. 4 zeigt vereinfacht die Abfrage hinsichtlich der Entscheidung, ob eine Signalverarbeitung nach dem linearen SAR- oder dem ROSAR-Prinzip erfolgt. Solange die Querbeschleunigung (Radialbeschleunigung) $\alpha_{ist}$ einen vorgebbaren Wert $\alpha_{Schwell}$ nicht überschreitet, erfolgt die Signalverarbeitung nach dem linearen SAR-Prinzip; überschreitet $\alpha_{ist}$ den vorgebbaren Wert $\alpha_{Schwell}$ erfolgt die Signalverarbeitung nach dem ROSAR-Prinzip. Dabei wird in einem ersten Schritt angenommen, dass die Beschleunigungskräfte nur in der horizontalen Ebene wirken und die Tangentialbeschleunigung (Bahnbeschleunigung) als bekannte Größe in die Berechnung eingeht bzw. als konstant angenommen wird. Eine Korrektur der Abweichung (Motion Compensation) von der idealen Kreisbahn ist in DE 195 286 13 C2 beschrieben.

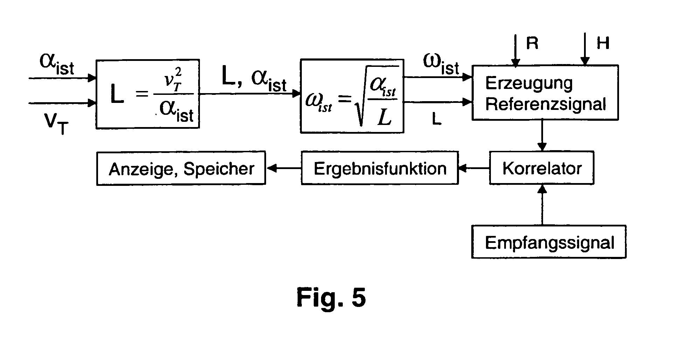

Fig. 5 zeigt ein Blockschaltbild zur Darstellung der Verarbeitung der Signaldaten nach dem ROSAR-Prinzip bei Kurvenflug. Aus jeweils aktuellen Daten der Geschwindigkeit $V_T$ des Flugkörpers und seiner Querbeschleunigung $\alpha_{ist}$ wird gemäß

$$L = \frac{v_T^2}{\alpha_{ist}}$$

der Kurvenradius L der Flugbahn des Flugkörpers berechnet. Aus der Querbeschleunigung $\alpha_{ist}$ und dem berechneten Kurvenradius L wird die Winkelgeschwindigkeit $\omega_{ist}$ des Flugkörpers bestimmt:

$$\omega_{ist} = \sqrt{\frac{\alpha_{ist}}{L}}\ .$$

Aus der aktuellen Winkelgeschwindigkeit $\omega_{ist}$ und dem aktuellen Kurvenradius L der Flugkurve des Fluggeräts sowie dem Abstand R zwischen Flugkörper und Ziel und der Höhe H des Flugkörpers über dem Boden wird die bekannte Klausing'sche ROSAR-Referenzfunktion ermittelt [1].

Die ROSAR-Referenzfunktion wird mit den Radarempfangssignalen kreuzkorreliert, hierfür sind jeweils ein Speicher zur Zwischenspeicherung der Radarempfangssignale und ein Korrelator vorhanden. Das Korrelationsergebnis, auch als Klausing'sche Ergebnisfunktion bezeichnet, wird an einer Anzeige, z.B. Monitor dargestellt und/oder einem weiteren Speicher zugeführt. Die Berechnung der Ergebnisfunktion aus der Kreuzkorrelation der ROSAR-Referenzfunktion mit dem Empfangssignalen ist z.B. in DE 43 23 511 C1 ausführlich beschrieben.

**Literatur**

[1] Klausing, Helmut: "Untersuchungen der Realisierbarkeit eines Radars mit synthetischer Apertur durch rotierende Antennen"; MBB-Publikation, MBB-UA-1150-89-Pub;München

**Patentansprüche**

1. Verfahren zur Signaldatenverarbeitung eines fluggerätgetragenen Radars mit synthetischer Apertur, bei welchem in einem Verfahrensschritt ein Empfangssignal mit einem Satz von Referenzfunktion kreuzkorreliert wird, wobei für jedes Entfernungsfenster eine Referenzfunktion vorhanden ist,
   **dadurch gekennzeichnet, dass**
   beim Geradeausflug, wobei die Querbeschleunigung $\alpha_{ist}$ des Fluggeräts unterhalb eines vorgebbaren Schwellwertes $\alpha_{Schwell}$ liegt, die Signalverarbeitung nach dem SAR-Prinzip mit linearer Apertur und beim Kurvenflug, wobei die Querbeschleunigung $\alpha_{ist}$ des Fluggeräts oberhalb eines vorgebbaren Schwellwertes $\alpha_{Schwell}$ liegt, die Signalverarbeitung nach dem ROSAR-Prinzip erfolgt, wobei für den Fall der Signalverarbeitung nach dem ROSAR-Prinzip die Referenzfunktion aus der aktuellen Winkelgeschwindigkeit $\omega_{ist}$, dem aktuellen Kurvenradius L der Flugkurve des Fluggeräts sowie dem Abstand R zwischen Fluggerät und Ziel und der Höhe H des Fluggeräts über dem Boden berechnet wird, wobei sich der aktuelle Kurvenradius L aus der aktuellen Geschwindigkeit $v_T$ des Fluggeräts und seiner Querbeschleunigung $\alpha_{ist}$ berechnet.

2. Verfahren nach Anspruch 1, wobei der Signalverarbeitung nach dem ROSAR-Prinzip kreisbogenförmige Flugabschnitte (A1, A2, A3) bei gleichzeitiger Annäherungen an ein Ziel (Z) zugrunde gelegt werden.

3. Fluggerät mit einem Radarsystem, welches zur Durchführung eines Verfahrens gemäß einem der vorangehenden Ansprüche ausgebildet ist und ein gemeinsames Antennen-Frontend zum Empfang der Radarempfangssignale für die Signalverarbeitung nach dem SAR-Prinzip mit linearer Apertur und für die Signalverarbeitung nach dem ROSAR-Prinzip vorhanden ist.

**Claims**

1. Method for signal data processing of an airborne radar having a synthetic aperture, in which, in one method step, a received signal is cross-correlated with a set of reference functions, wherein there is one reference function for each range window,
   **characterized in that**
   when flying in a straight line, with the lateral acceleration $\alpha_{act}$ of the aircraft being below a predeterminable threshold value $\alpha_{threshold}$, the signal processing is carried out on the SAR principle with a linear aperture, and, during turning flight, when the lateral acceleration $\alpha_{act}$ of the aircraft is above a predeterminable threshold value $\alpha_{threshold}$, the signal processing is carried out on the ROSAR principle, wherein, when signal processing is carried out on the ROSAR principle, the reference function is calculated from the current angular velocity $\omega_{act}$, the current turn radius L of the flight turn of the aircraft, as well as the distance R between the aircraft and the target, and the height H of the aircraft above the ground, wherein the current turn radius L is calculated from the current velocity $v_T$ of the aircraft and its lateral acceleration $\alpha_{act}$.

2. Method according to Claim 1, wherein the signal processing on the ROSAR principle is based on flight sections (A1, A2, A3) in the form of circular arcs, with a simultaneous approach to a target (Z).

3. Aircraft having a radar system, which is designed to carry out a method according to one of the preceding claims, and a common antenna front end is provided in order to receive the radar received signals for signal processing on the SAR principle with a linear aperture, and for signal processing on the ROSAR principle.

**Revendications**

1. Procédé de traitement de données de signal d'un radar transporté par un engin volant avec une ouverture synthétique, selon lequel une corrélation croisée d'un signal de réception avec un ensemble de fonctions de référence est effectuée dans une étape du procédé, une fonction de référence étant présente pour chaque créneau de distance, **caractérisé en ce que** dans le cas d'un vol rectiligne, l'accélération transversale $\alpha_{ist}$ de l'engin volant étant inférieure à une valeur de seuil $\alpha_{Schwell}$ à prédéfinir, le traitement du signal est réalisé selon le principe SAR avec ouverture linéaire et, dans le cas d'un vol curviligne, l'accélération transversale $\alpha_{ist}$ de l'engin volant étant supérieure à une valeur de seuil $\alpha_{Schwell}$ prédéfinissable, le traitement du signal est réalisé selon le principe ROSAR, la fonction de référence, dans le cas du traitement du signal selon le principe ROSAR, étant calculée à partir de la vitesse angulaire courante $\omega_{ist}$, du rayon de courbure actuel L de la courbure de vol de l'engin volant et de la distance R entre l'engin volant et la cible ainsi que la hauteur H de l'engin volant au-dessus du sol, le rayon de courbure actuel L étant calculé à partir de la vitesse actuelle $v_T$ de l'engin volant et de son accélération transversale $\alpha_{ist}$.

2. Procédé selon la revendication 1, le traitement du signal selon le principe ROSAR se basant sur des sections de vol de forme circulaire (A1, A2, A3) avec approche simultanée d'une cible (Z).

3. Engin volant muni d'un système radar qui est configuré pour mettre en oeuvre un procédé selon l'une des revendications précédentes et possédant une tête d'antenne commune pour recevoir les signaux de réception radar pour le traitement du signal selon le principe SAR avec ouverture linéaire et pour le traitement du signal selon le principe ROSAR.

**Fig. 1**

**Fig. 2**

**Fig. 3**

**Fig. 4**

$$\alpha_{ist} \longrightarrow \boxed{L = \frac{v_T^2}{\alpha_{ist}}} \xrightarrow{L,\ \alpha_{ist}} \boxed{\omega_{ist} = \sqrt{\frac{\alpha_{ist}}{L}}} \xrightarrow{\omega_{ist}} \boxed{\begin{array}{c}\text{Erzeugung}\\\text{Referenzsignal}\end{array}}$$

R   H

L

| Anzeige, Speicher | ← | Ergebnisfunktion | ← | Korrelator |

Empfangssignal

## Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3882707 T2
- DE 3922086 C1
- DE 4323511 C1
- WO 0208771 A
- DE 19528613 C2